# EUROPEAN PATENT SPECIFICATION

(11) **EP 1 442 493 B1**
(45) Date of publication and mention of the grant of the patent: **20.01.2010**
(21) Application number: 02802699.5
(22) Date of filing: 16.10.2002
(51) Int. Cl.: H01M 8/04

(54) **FUEL CELL SYSTEM AND ITS STARTUP CONTROL**
BRENNSTOFFZELLENSYSTEM UND SEINE EINSCHALTSTEUERUNG
SYSTEME DE PILES A COMBUSTIBLE ET SA COMMANDE DE DEMARRAGE

(30) Priority: 08.11.2001 JP 2001342937
(43) Date of publication of application: 04.08.2004
(73) Proprietor: NISSAN MOTOR COMPANY LIMITED, Yokohama-shi Kanagawa 221-0023 (JP)
(72) Inventor: TAKAHASHI, Shinichi, Vernon, CT 06066 (US); YOSHIZAWA, Koudai, Yokosuka-shi, Kanagawa 237-0062 (JP)
(74) Representative: Weber, Joachim
(86) International application number: PCT/JP2002/010740
(87) International publication number: WO 2003/041201

(56) References cited:
- EP-A- 0 833 400
- PATENT ABSTRACTS OF JAPAN vol. 010, no. 104 (E-397), 19 April 1986 (1986-04-19) & JP 60 241669 A (MITSUBISHI DENKI KK), 30 November 1985 (1985-11-30)
- PATENT ABSTRACTS OF JAPAN vol. 010, no. 104 (E-397), 19 April 1986 (1986-04-19) & JP 60 241670 A (MITSUBISHI DENKI KK), 30 November 1985 (1985-11-30)

## Description

### FIELD OF THE INVENTION

This invention relates to a fuel cell system, and more particularly to startup control when a fuel cell system is started from a low temperature state.

### BACKGROUND OF THE INVENTION

A fuel cell system transforms the energy of fuel, directly into electrical energy. In the fuel cell system disclosed by JP8-106914A published by the Japanese Patent Office in 1996, in a pair of electrodes provided on either side of a membrane electrode, fuel gas containing hydrogen is supplied to the anode and an oxidizing agent gas containing oxygen is supplied to the cathode. Electrical energy is then extracted from the electrodes, using the electrochemical reactions produced on the surface of the membrane electrode, i.e.,

anode reaction: H₂ → 2H⁺ + 2e⁻

cathode reaction: 2H⁺ + 2e⁻ + (1/2)O₂ → H₂O

The fuel gas supplied to the anode, may be supplied directly from a hydrogen storage device, or fuel containing hydrogen may be reformed, and the reformed hydrogen-containing gas supplied to the anode. The fuel containing hydrogen may be natural gas, methanol or gasoline, and the oxidizing agent gas supplied to the cathode is generally air.

As it is necessary to keep the humidification state of the membrane electrode optimal in order to extract the performance of the membrane electrode in the fuel cell and enhance the power generation efficiency, the fuel gas and air introduced into the fuel cell is humidified. When reforming fuel gas and extracting hydrogen as mentioned above, water is used for reforming. Therefore, in order to use the fuel cell for vehicles, a water balance must be maintained within the fuel cell system including the fuel cell or reforming device. This is because the practicality of a fuel cell vehicle will fall remarkably if water runs short and it becomes necessary to supply pure water periodically.

There are two means of supplying water to the membrane electrode. One is the method of humidifying the fuel gas or air with a humidifier, and humidifying the membrane electrode using the moisture. Another is the method of connecting a cooling water passage to the anode and cathode in the fuel cell via a bipolar plate comprising a porous material, and supplying water to the membrane electrode from the cooling water to humidify the membrane electrode. Since the latter method does not need a humidifier for fuel gas and air, there is an advantage in that the system construction is simpler.

### SUMMARY OF THE INVENTION

When starting the fuel cell system at low temperature, the water generated inside the fuel cell and the moisture in the fuel and air condense inside the fuel cell, and may block the fuel and air passage, which is called "water clogging." Water clogging reduces the efficiency of the fuel cell, and in particular, water clogging which occurs during startup lengthens the warm-up time of the fuel cell. As the frequency of startup operations is high in vehicles, the lengthening of the warm-up time of the fuel cell system reduces the usability of the fuel cell vehicle.

One of the methods of resolving water clogging is the blowing away of the condensed water by increasing the pressure of the fuel gas or air. However, if gas or air is delivered to the fuel cell at higher than ordinary operating pressure, the membrane electrode inside the fuel cell or the durability of the sealing will be degraded, the performance of the fuel cell will be reduced and its life will be shortened. In the fuel cell for vehicles, although there are differences in the frequency of use, startup operations may be performed from hundreds of times to thousands of times, so the above decline of performance is remarkable. Also, the ability to vary the pressure of fuel gas and air makes the system construction complicated.

Another method is to heat the fuel cell stack itself. However, the heating of the fuel cell stack makes the system complex. If the energy required for heating becomes large, the fuel economy of the vehicle decreases. Further, the time required for heating is too long for the vehicle.

JP 60 241669 A comprises a fuel cell controller controlling the cell temperature to a predetermined level against a load variation. The temperature of a cell is detected through a detector and compared with a setting level to obtain a setting pressure and a setting flow. The setting pressure is then compared with a pressure detected through a pressure sensor to control a regulation value at a steam discharge port of a tank and to compare the flow with the level of a cooling water flow detector thus to increase/decrease the rotation of a pump. The temperature of the cell can be maintained at a predetermined level upon variation of a load.

A further fuel cell controller is pre-known from JP 60 241670. The temperature of a cell is detected through a detector and compared with a setting level to obtain a setting pressure which is compared with the level of a pressure sensor in a tank thus to increase/decrease the opening of a regulation valve provided at the steam discharge port. When varying the temperature in accordance to the pressure variation of the cooling water, the temperature of the cell can be maintained at a predetermined level with quickened response while following after the temperature variation under a load variation.

WO 01/08246 A1 discloses a direct antifreeze cooled fuel cell. In operation of the fuel cell, because product water generated electrochemically at the cathode catalyst flows away from the catalyst into the cathode substrate and into the water transport plate and because the cathode substrate is wetproofed, antifreeze solution passing through the water transport plate remains essentially within the water transport plate.

It is therefore an object of this invention to provide a fuel cell stack wherein a cooling water passage is connected to a fuel gas passage and air passage via a porous plate, wherein the water in the anode and cathode flow out efficiently to the cooling water passage during startup from low temperature, the water balance in the fuel cell stack is maintained, and the problem of clogging is resolved.

According to the invention, the object is solved by the features of the independent claims. The sub-claims comprise further advantageous developments of the invention.

In order to achieve above object, this invention provides a fuel cell system, comprising a fuel cell stack wherein a cooling water passage and an electrode are connected via a porous plate through which water can pass, a pressure adjusting device which adjusts the pressure of cooling water in the cooling water passage, and a controller. The controller functions to determine whether warmup of the fuel cell stack stack is complete based on the running state of the fuel cell stack, and before warmup of the fuel cell stack is complete, control the pressure adjusting device to decease the cooling water pressure lower than the cooling water pressure after warmup is complete.

According to an aspect of this invention, this invention provides a startup method for a fuel cell system including a fuel cell stack wherein a cooling water passage and an electrode are connected via a porous plate through which water can pass and a pressure adjusting device which adjusts the pressure of cooling water in the cooling water passage, the method comprising determining whether warmup of the fuel cell stack is complete based on the running state of the fuel cell stack, and before warmup of the fuel cell stack is complete, controlling the pressure adjusting device to decrease the cooling water pressure lower than the cooling water pressure after warmup is complete.

The details as well as other features and advantages of this invention are set forth in the remainder of the specification and are shown in the accompanying drawings.

### BRIEF DESCRIPTION OF THE DRAWINGS

Fig. 1 is a block diagram of a fuel cell system relating to this invention.
Fig. 2 is a flowchart showing the startup processing of the fuel cell system.
Fig. 3 is a flowchart showing the startup processing taking the humidification state of a membrane electrode into consideration.
Fig. 4 is similar to Fig. 1, but is a block diagram of a fuel cell system according to the second embodiment
Fig. 5 is a flowchart showing the startup processing according to the second embodiment.
Fig. 6 is similar to Fig. 1, but is a block diagram of a fuel cell system According to the third embodiment
Fig. 7 is a flowchart showing the startup processing according to the third embodiment.

### DESCRIPTION OF THE PREFERRED EMBODIMENTS

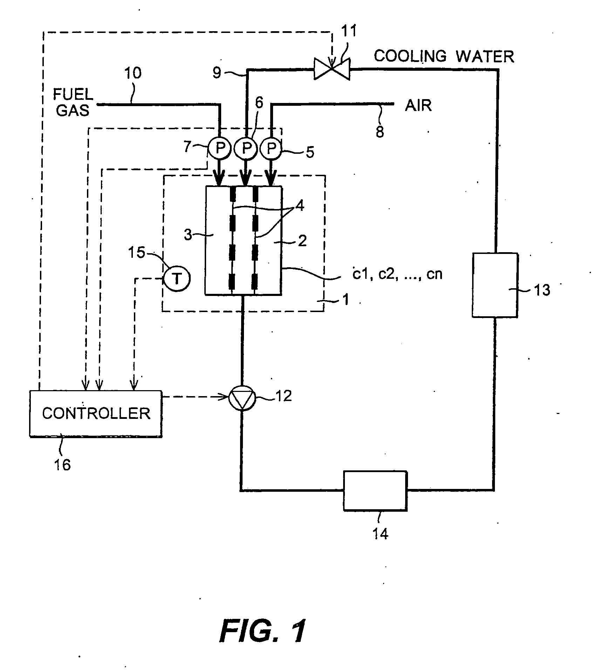

Referring to Fig. 1 of the drawings, a fuel cell system relating to this invention is provided with a fuel cell stack 1 comprising plural cells c1, c2, ..., cn, pressure sensors 5, 6, 7, a cooling water pump 12, a cooling water tank 13, a heat exchanger 14 and a controller 16. A temperature sensor 15 for measuring the internal temperature *Tsin* of the fuel cell stack 1 is installed inside the fuel cell stack 1. Measurement signals from these sensors are input into the controller 16.

Pressure sensors 5, 6, 7 measure the pressure in an air passage 8 which supplies air, a cooling water passage 9 which supplies cooling water and a fuel gas passage 10 which supplies fuel gas to the fuel cell stack 1, in the vicinity of the inlet to the fuel cell stack 1..

The controller 16 comprises one, two or more microprocessors, a memory and an input/output interface. The controller 16 calculates a pressure difference ΔP between the cooling water passage 9 and electrodes, a cathode 2 and anode 3 at the inlet of the fuel cell stack 1, from the signals from the pressure sensors 5, 6, 7. When the system is started, the controller 16 determines a pressure *Pcw* of cooling water according to the internal temperature *Tsin* of the fuel cell stack 1 detected by the temperature sensor 15, and controls the opening of a pressure reducing valve 11 and the rotation speed of the cooling water pump 12 so that a determined cooling water pressure *Pcw* is realized.

Specifically, before warm-up of the fuel cell stack 1 is complete, when the internal temperature *Tsin* of the fuel cell stack 1 is low and when water clogging by water condensed in the cathode 2 and anode 3 may occur, the pressure *Pcw* of cooling water is controlled to be lower than the pressure *Pnormal* used in the steady state after warmup is complete. In this way, the water condensed in the cathode 2 and anode 3 can be made to flow into the cooling water passage 9 efficiently using the pressure difference via the holes in the porous plate 4, and water clogging can be prevented. The cooling performance of the fuel cell stack 1 falls due to the lowering of the cooling water pressure *Pcw*. However, as this happens before warmup of the fuel cell stack 1 is completed, this does not pose a problem. Conversely, cooling of the fuel cell stack 1 can be suppressed and warmup can be promoted. As water does not flow out to the outside of the system from the air passage 8 and the fuel gas passage 10, the total amount of the water in the fuel cell stack 1 is kept constant, i.e., the water balance is maintained.

Subsequently, if the internal temperature *Tsin* of the fuel cell stack 1 rises and warmup is completed, water clogging cannot occur, so the pressure *Pcw* of cooling water is controlled to the pressure *Pnormal* in the steady state, and the cooling performance of the fuel cell stack 1 is ensured.

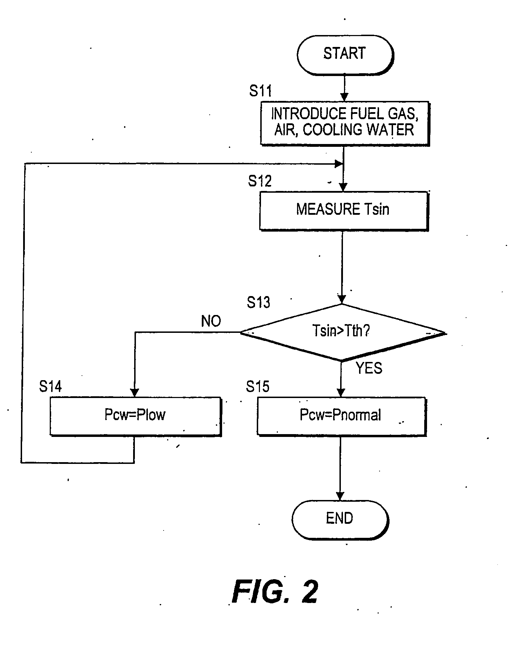

Fig. 2 is a flowchart showing startup processing, and this is performed at a predetermined time, for example every 10 milliseconds, by the controller 16.

First, in a step S 11, fuel gas, air and cooling water start to be introduced to the fuel cell stack 1.

In a step S12, the internal temperature *Tsin* of the fuel cell stack 1 is measured. In a step S 13, the measured internal temperature *Tsin* and the predetermined temperature *Tth* are compared. The predetermined temperature *Tth* is set according to the shape of the gas, air and cooling water passages, and the construction of the system. For example, it is set to the lowest temperature of the temperatures at which water clogging by the water condensed in the cathode 2 and anode 3 of the fuel cell stack 1 does not occur. The predetermined temperature *Tth* is set lower than the running temperature (about 60°C-70°C) of the fuel cell stack 1. From experiment, it was found that water clogging does not occur above 40°C, and it was possible to run the vehicle by setting the cooling water pressure *Pcw* to the pressure *Pormal,* so the predetermined temperature *Tth* was set to 40°C.

It was determined that when the internal temperature *Tsin* is lower than the predetermined temperature *Tth*, water clogging occurs due to the water condensed in the cathode 2 and anode 3, so the routine proceeds to step S14, the water pressure *Pcw* is controlled to a predetermined low pressure power *Plow*, and the water condensed in the cathode 2 and anode 3 is made to flow out to the cooling water passage 9.

In order to increase the outflow efficiency of the condensed water, it is preferred to make the cooling water pressure *Pcw* as low as possible relative to the cathode 2 and anode 3. However, if the differential pressure Δ*P* between the cooling water passage 9 and the electrodes 2, 3 (cathode 2 and anode 3) becomes too large, fuel gas or oxidizing agent gas penetrates the cooling water passage 9. If the differential pressure Δ*P* is further increased, the internal structure of the membrane electrode or cell may break down. Thus, although the cooling water pressure *Pcw* is controlled to be as low as possible, the differential pressure Δ*P* between the cooling water passage 9 and the electrodes 2, 3 is controlled so that the pressure is higher than the minimum value of the pressure at which fuel gas or oxidizing agent gas penetrates the cooling water passage 9.

While the internal temperature *Tsin* of the fuel- cell stack 1 is lower than the predetermined temperature *Tth*, the steps S12, S13, S14 are repeated. Subsequently, if warmup of the fuel cell stack 1 proceeds and the internal temperature *Tsin* exceeds the predetermined temperature *Tth,* it is determined that the condensation amount of the water in the fuel cell stack. 1 is sufficiently small, water clogging by the condensed water does not occur, and the routine proceeds to a step S15.

When the routine proceeds to the step S15, the cooling water pressure *Pcw* is controlled to the pressure *Pnormal* normally used in steady running. Thereafter, the cooling water pressure *Pcw* is controlled to this ordinary pressure *Pnormal,* and the cooling performance of the fuel cell stack 1 is ensured.

Here, the differential pressure Δ*P* between the cooling water passage 9 and the electrodes 2, 3 (cathode 2 and anode 3) is calculated, and the minimum of the cooling water pressure *Pcw* is set based thereon. However, the pressure value for low cooling water pressure operation (fixed value) may be predefined, and the cooling water pressure *Pcw* changed over to this preset value immediately in the step S 14 when low cooling water pressure running is performed. Thus, the system construction can be simplified and the control response can be improved.

As water may freeze when the internal temperature *Tsin* of the fuel cell stack 1 is lower than 0°C, when the detected internal temperatures *Tsin* is lower than 0°C, a routine not shown is performed, and the internal water must be thawed by heating with a heater or circulating high temperature gas to the passage in the fuel cell stack 1 beforehand, and the aforesaid processing performed afterwards.

Moreover, as it is necessary to appropriately humidify the membrane electrode of the fuel cell stack 1, the humidification state of the membrane electrode is detected, and when the water content of the membrane electrode is smaller than a predetermined value, the pressure *Pcw* of the cooling water passage 9 is controlled to a second low pressure *Prow2* (*Plow<Plow2<Pnormal*) which is lower than the normal running pressure *Pnormal* and higher than the pressure *Plow* set in the step S14. By adding such processing, even the movement of the moisture in the membrane electrode to the cooling water passage 9 can be prevented, and the humidification state of the membrane electrode can be maintained at a satisfactory level.

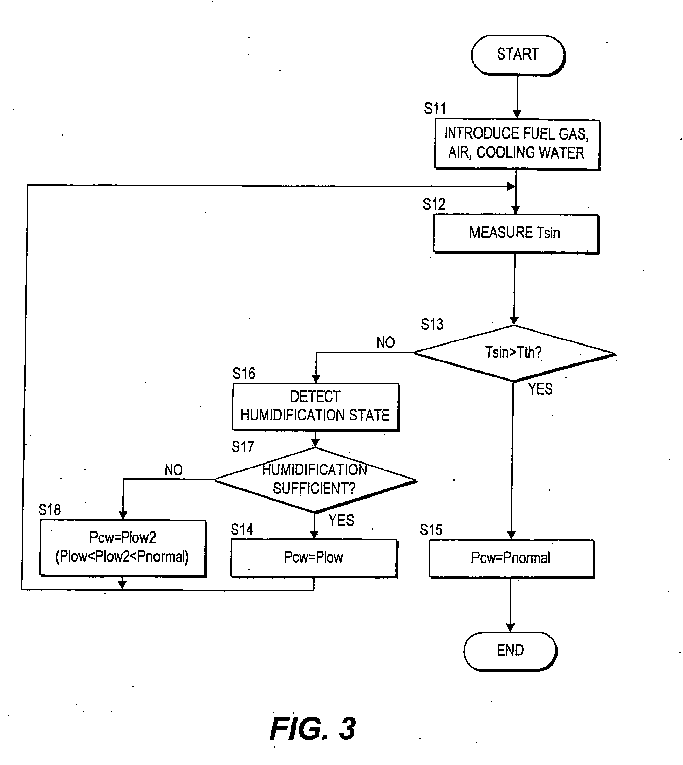

Fig. 3 is a flowchart showing the startup processing when taking the humidification state of the membrane electrode into consideration: Steps S16-S18 are added to what was shown in Fig. 2.

The humidification state of the membrane electrode is detected in the step S16. The humidification state of the membrane electrode can be predicted from the state change of the fuel cell stack 1 such as the change of electromotive force and the reserved water amount in the water tank 13. More specifically, to predict this more directly, the temperature is detected for every cell forming the fuel cell stack 1, the temperature distribution of cells is measured as shown in the embodiment described below, and the prediction is based thereon.

When it is determined in the step S 17 that humidification of the membrane electrode is not sufficient, the routine proceeds to the step S 18, and the pressure *Pcw* of the cooling water passage 9 is controlled to the pressure *Plow2* which is lower than the normal running pressure *Pnormal* and higher than the pressure set in the step S14.

Next, a second embodiment of this invention will be described.

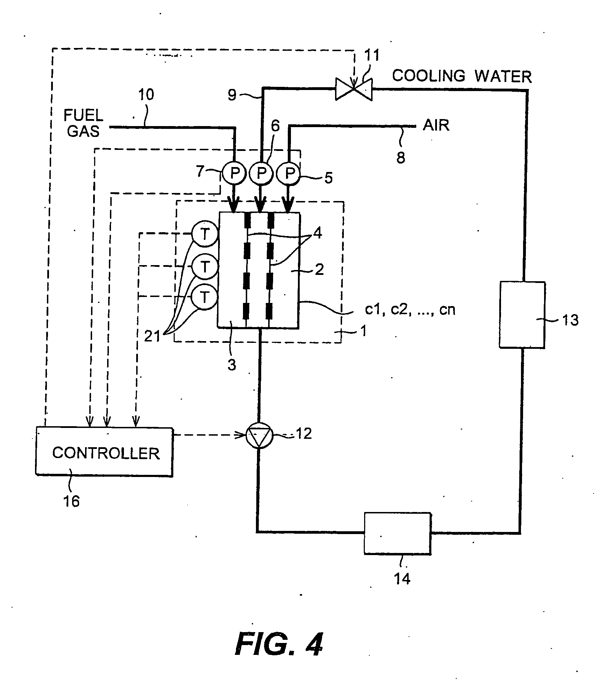

Fig. 4 shows the construction of a fuel cell system of the second embodiment Temperature sensors 21 are installed which measure the temperatures in each cell c1, c2, ..., cn of the fuel cell stack 1, which is a difference from the first embodiment For convenience, only three sensors 21 have been shown in Fig. 3, but there may be a larger or smaller number of the sensors 21 according to the number of the cells.

Moreover, the startup processings of the system performed by the controller 16 is also different The controller 16 predicts water clogging from the temperature distribution of the cells, and performs pressure control of cooling water. The average of the cell temperatures is calculated, and the cooling water pressure *Pcw* is also controlled based on the differential pressure Δ*P* between the cooling water and the electrodes 2, 3 (cathode 2 and anode 3) at the inlet of the fuel cell stack, and the average *Tcelave* of cell temperature.

Specifically, the controller 16 predicts water clogging from the dispersion (bias) in the distribution of the cell temperatures. For example, there is a bias in a temperature distribution such as when the temperature of some cells is low and the possibility of water clogging is predicted, the pressure *Pcw* of cooling water is immediately reduced to the minimum valve *Plow* of pressure at which penetration of fuel gas or oxidizing agent gas into the cooling water passage 9 does not take place, and the outflow efficiency of water from the cathode 2 and anode 3 to the cooling water passage 9 is increased to the maximum so as to rapidly eliminate any water clogging.

Even after water clogging has been resolved, before warmup of the fuel cell stack 1 is complete, when the average temperature *Tcelave* of the cell is lower than the predetermined temperature *Tth* and there is a possibility that water clogging may occur in the.fuel cell stack 1, the pressure *Pcw* of cooling water is controlled lower than the pressure *Pnormal* in steady running as in the preceding embodiment, and water in the cathode 2 and anode 3 is made to flow efficiently into the cooling water passage 9 via the holes in the porous plate 4.

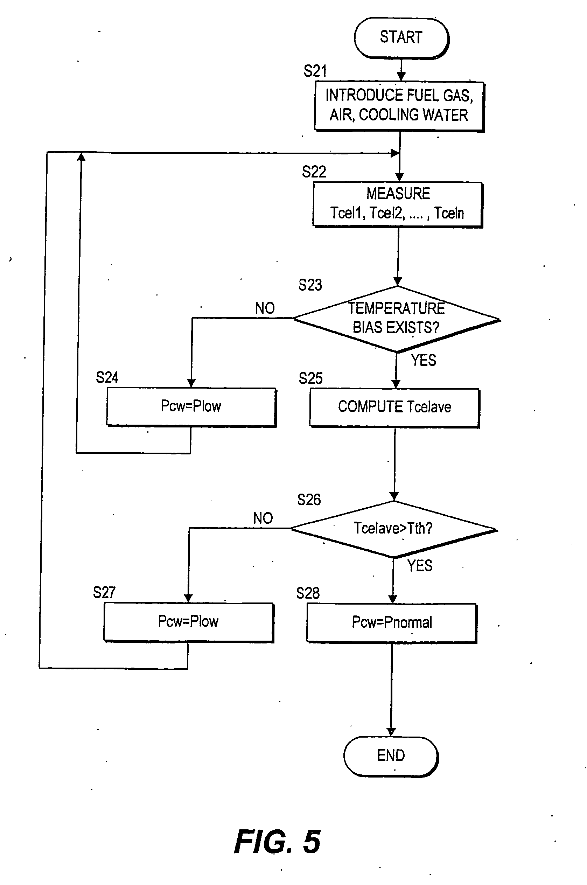

Fig. 5 is a flowchart showing startup processing of the fuel cell system; and is performed at a predetermined time, for example every 10 milliseconds, by the controller 16.

First, in a step S21, introduction of fuel gas, air and cooling water to the fuel cell stack 1 is started. In a step S22, the temperatures *Tcel1, Tcel2, ..., Tceln* of the cells c1, c2, ..., cn of the fuel cell stack 1, are measured.

In. a. step S23, water clogging is predicted from the distribution of cell temperature. When the temperature of only some cells is lower than the temperature of other cells, it is predicted that water clogging may occur in the cells at low temperature. When it is predicted that there is water clogging, the routine proceeds to a step S24, and the cooling water pressure *Pcw* is set to the minimum pressure *Plow.* The minimum pressure *Plow* is the minimum value of pressure at which penetration of fuel gas or oxidizing agent gas into the cooling water passage 9 does not take place, and is set based on the differential pressure Δ*P* between the cooling water passage 9 and the electrodes 2, 3 as in the preceding embodiment. By lowering the cooling water pressure *Pcw* to the minimum pressure *Plow,* the outflow of condensed water in the cathode 2 and anode 3 to the cooling water passage 9 is enhanced to the maximum, and water clogging can be eliminated at an early stage.

When it is determined that the bias of temperature distribution has disappeared and water clogging in the fuel cell stack 1 was eliminated, the routine proceeds to a step S25 and the average temperature *Tcelave* of the cells is calculated.

In a step S26, the average temperature *Tcelave* of the cells is compared:with the predetermined temperature *Tth* (the minimum temperature of the temperatures at which water clogging due to the condensed water does not occur), and when the cell average temperature *Tcelave* is lower than the predetermined temperature *Tth,* the routine proceeds to a step 527, and the cooling water pressure *Pcw* is set lower than the pressure for steady running, *Pnormal,* as in the step S14 of the preceding embodiment. When the cell average temperature *Tcelave* subsequently reaches the predetermined temperature *Tth,* the routine proceeds to a step S28, and the cooling water pressure *Pcw* is set to the pressure used for steady running, *Pnormal.*

In this embodiment, the cell temperature is measured, and the presence or absence of water clogging is determined from the temperature distribution. When it is determined that there is water clogging, the cooling water pressure *Pcw* is lowered to the minimum pressure *Plow,* and priority is given to the outflow of water from the cathode 2 and anode 3 into the cooling water passage 9. Thereby, water clogging in the fuel cell stack 1 can be eliminated at an early stage. After water clogging is eliminated, the same startup processing can be performed as in the preceding embodiment according to the cell average temperature *Tcelave,* and thereafter, the fuel cell system can be started without water clogging.

Also in this embodiment, as in the first embodiment, the humidification state of the membrane electrode of the fuel cell stack 1 is predicted from the electromotive force etc., and if the humidification of the membrane electrode is not sufficient, the cooling water pressure *Pcw* is raised to *Plow2* which is higher than the pressure *Plow* set in the step S27, movement of water into the cooling water passage 9 from the cathode 2 and anode 3 is suppressed, and humidification of the membrane electrode is assisted as in the first embodiment. In particular, in this embodiment, as the cell temperature distribution is detected, the humidification- state of the membrane electrode can be predicted with high precision from the change of cell temperature distribution and electromotive force.

Next; a third embodiment of this invention will be described.

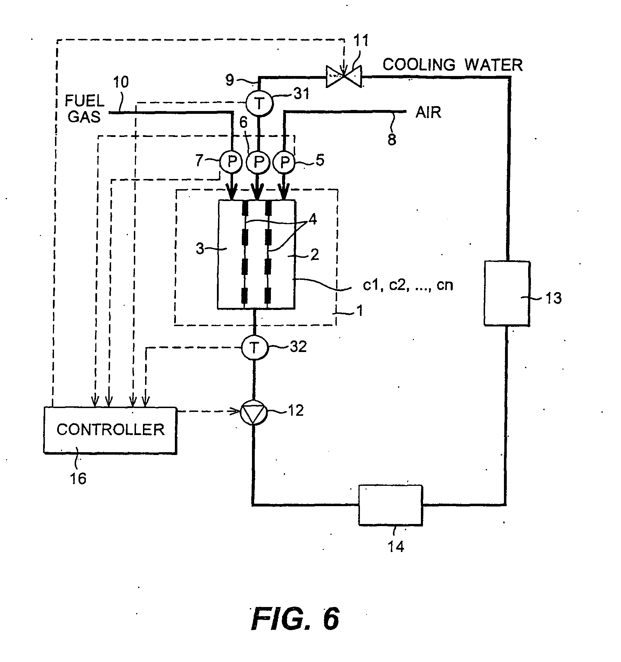

Fig. 6 shows the construction of the fuel cell system of the third embodiment This is essentially identical to the construction of the first embodiment, however temperature sensors 31, 32 are formed in the cooling water passage 9 near the inlet and outlet of the fuel cell stack 1, respectively. Also, the startup processing of the system performed by the controller 16 is also different.

The controller 16 calculates a temperature difference Δ*T* of the cooling water between the fuel cell inlet and outlet.. From this temperature difference Δ*T*, the reaction status inside the fuel cell stack 1 can be grasped, water clogging can be estimated and cooling water pressure control performed. The temperature difference Δ*T* can be measured by installing temperature sensors 31, 32 at the fuel cell inlet and outlet, respectively, as shown in Fig. 6, or by installing a thermocouple in the cooling water passage 9. In both cases, temperature measurement can be performed more easily than by measuring the internal temperature of the fuel cell stack 1 by installing sensors inside the fuel cell stack 1.

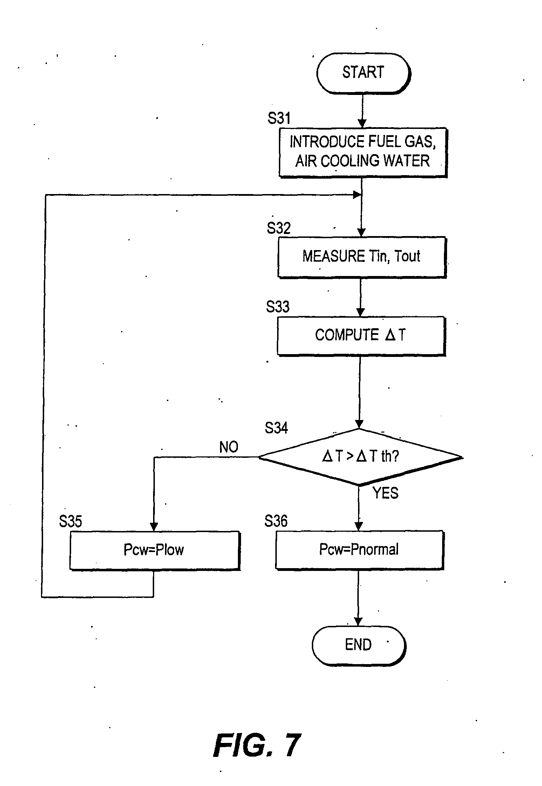

Fig. 7 is a flowchart showing startup processing of the fuel cell system, and is performed at a predetermined time, for example every 10 milliseconds, by the controller 16.

First, in a step S31, introduction of fuel gas, air and cooling water to the fuel cell stack 1 is started.

In a step S32, the cooling water temperatures *Tin, Tout* at the inlet and outlet of the fuel cell stack 1 are measured. In a step S33, the temperature difference Δ*T* of cooling water between the inlet and outlet of the fuel cell stack 1 is computed.

In a step S34, this temperature difference Δ*T* and a preset temperature *difference ΔTth* are compared. For example, if the outside atmospheric temperature is approximately 20°C and the running temperature of the fuel cell stack 1 is approximately 60°C-70°C, the temperature difference Δ*Tth* is set to a value between 20°C-50°C. When the temperature difference Δ*T*. is smaller than *ΔTth,* it is determined that warmup of the fuel cell stack 1 is not complete and water clogging due to condensation of water may occur in the fuel cell stack 1, so the routine proceeds to a step S35, and the cooling water pressure *Pcw* is set to *Plow* (*<Pnormal*)*.*

Subsequently, if warmup of the fuel cell stack 1 continues and the temperature difference Δ*T* becomes larger than Δ*Tth,* it is assumed that warmup of the fuel cell stack 1 is complete, and the routine proceeds to a step S36. Thereafter, the cooling water pressure *Pcw* is controlled to the pressure *Pnormal* normally used for steady running.

Even if warmup completion of the fuel cell stack 1 is determined based on the temperature difference Δ*T* of cooling water at the inlet and outlet of the fuel cell stack 1, the same startup processing as in the preceding embodiment is possible.

Although the warmup state of the fuel cell stack 1 was determined here based on temperature difference Δ*T* of cooling water at the inlet and outlet of the fuel cell stack 1, the warmup state of the fuel cell stack 1 may be determined based on the temperature difference of fuel gas or air at the inlet and outlet of the fuel cell stack 1.

Further, the sensor at the inlet may be omitted, and the warmup state of the fuel cell stack 1 may be determined from the temperature rise of fluid (cooling water, fuel gas, or air) at the outlet. For example, if it is determined that warmup of the fuel cell stack 1 is complete when the temperature of cooling water at the outlet has risen to a predetermined temperature, the system construction is simplified and control is also simplified.

Moreover, also in this embodiment, the humidification state of the membrane electrode of the fuel cell stack 1 may be detected from the electromotive force etc., as in the preceding embodiment, and if the humidification of the membrane electrode is not sufficient, the cooling water pressure is raised to *Plow2* which is higher than the pressure *Plow* set in the step S35, movement of water into the cooling water passage 9 from the cathode 2 and anode 3 is suppressed, and humidification of the membrane electrode is assisted.

### INDUSTRIAL FIELD OF APPLICATION

This invention may be applied to various fuel cell systems including those of vehicles, and is useful for preventing water clogging when starting from a low temperature state, and enhancing startup of the fuel cell system.

## Claims

1. A fuel cell system, comprising:
a fuel cell stack (1) wherein a cooling water passage (9) and an electrode (2,3) are connected via a porous plate (4) through which water can pass,
a pressure adjusting device (11, 12) which adjusts the pressure of cooling water in the cooling water passage (9), **characterized by**
a controller (16) configured to:
determine whether warmup of the fuel cell stack (1) is complete based on the running state of the fuel cell stack (1), and
before warmup of the fuel cell stack (1), is complete, control the pressure adjusting device (11, 12) to decrease the cooling water pressure lower than the cooling water pressure after warmup is complete.

2. The fuel cell system as defined in Claim 1, wherein:
the controller (16) further configured, before warmup of the fuel cell stack (1) is complete, to control the pressure adjusting device (11, 12) to set the cooling water pressure to a pressure at which gas at the electrode (2, 3) does not penetrate the cooling water passage (9).

3. The fuel cell system as defined in Claim 1, wherein:
the controller (16) further configured, before warmup of the fuel cell stack (1) is complete, to control the pressure adjusting device (11, 12) to set the cooling water pressure higher than a minimum value at which gas at the electrode (2, 3) does not penetrate the cooling water passage (9).

4. The fuel cell system as defined in Claim 3, further comprising a sensor (5, 6, 7) which detects a differential pressure between the cooling water passage (9) and the electrode (2, 3) at the inlet of the fuel cell stack (1), and
the controller (16) further configured to determine the minimum value of the pressure at which gas at the electrode (2, 3) does not penetrate the cooling water passage (9) according to the measured differential pressure.

5. The fuel cell system as defined in Claim 1 further comprising a sensor (15) which detects the temperature of the fuel cell stack (1), and
the controller (16) further configured to determine that warmup of the fuel cell stack (1) is complete when the temperature of the fuel cell stack (1) has risen to a predetermined temperature.

6. The fuel cell system as defined in Claim 5, wherein:
the sensor (15) which detects the temperature of the fuel cell stack (1) detects the internal temperature of the fuel cell stack (1), and
the controller (16) further configured to determine that warmup of the fuel cell stack (1) is complete when the internal temperature of the fuel cell stack (1) has risen to a predetermined temperature at which water clogging in the fuel cell stack (1) does not occur.

7. The fuel cell system as defined in Claim 1, wherein:
the fuel cell stack (1) includes plural cells (c1, c2, ..., cn),
the system further comprises sensors (21) which detect the temperatures of the cells (c1, c2, ..., cn), and
the controller (16) further configured to determine that warmup of the fuel cell stack (1) is complete when the average temperature of the cells (c1, c2, ..., cn) has risen to a predetermined temperature at which water clogging in the fuel cell stack (1) does not occur.

8. The fuel cell system as defined in Claim 7, wherein:
the controller (16) further configured to predict water clogging in the fuel cell stack (1) from the cell temperature distribution, and controls the pressure of the cooling water to be higher than a minimum value at which gas at the electrode (2, 3) does not penetrate the cooling water passage (9).

9. The fuel cell system as defined in Claim 1, further comprising a sensor (32) which detects the temperature of the fluid supplied to the fuel cell stack (1) at the outlet of the fuel cell stack (1), and
the controller (16) further configured to determine that warmup of the fuel cell stack (1) is complete when the temperature of the fluid at the outlet of the fuel cell stack (1) has risen to a predetermined temperature.

10. The fuel cell system as defined in Claim 1, further comprising a sensor (31, 32) which detects a temperature difference of the fluid supplied to the fuel cell stack (1) at the inlet and outlet of the fuel cell stack (1), wherein:
the controller (16) further configured to determine that warmup of the fuel cell stack (1) is complete when the temperature difference of the fluid at the inlet and outlet of the fuel cell stack (1) has increased to a predetermined temperature.

11. The fuel cell system as defined in Claim 9 or 10, wherein the fluid is one of cooling water, fuel gas and air supplied to the fuel cell stack (1).

12. The fuel cell system as defined in any one of Claims 1 to 11, wherein the controller (16) further configured to:
determine the humidification state of the membrane electrode of the fuel cell stack (1) from the running state of the fuel cell stack (1), and
when the membrane electrode is not sufficiently humidified the pressure of the cooling water is increased to suppress outflow of water from the electrode (2,3) to the cooling water passage (9).

13. A startup method for a fuel cell system including a fuel cell stack (1) wherein at cooling water passage (9) and an electrode (2,3) are connected via a porous (4) cooling water passage (9) and an electrode (2,3) are connected via a porous plate (4) through which water can pass and a pressure adjusting device (11, 12) which adjusts the pressure of cooling water in the cooling water passage (9), the method comprising:
determining whether warmup of the fuel cell stack (1) is complete based on the running state of the fuel cell stack (1), and
before warmup of the fuel cell stack (1) is complete, controlling the pressure adjusting device (11, 12) to decrease the cooling water perssure lower than the cooling water pressure after warmup is complete

## Patentansprüche

1. Brennstoffzellensystem, umfassend:
einen Brennstoffzellenstapel (1), bei dem ein Kühlwasserdurchgang (9) und
eine Elektrode (2, 3) über eine poröse Platte (4), durch die Wasser hindurchtreten kann, verbunden sind,
eine Druckeinstellvorrichtung (11, 12), welche den Druck des Kühlwassers in dem Kühlwasserdurchgang (9) einstellt, **gekennzeichnet durch**
eine Steuerung, die ausgelegt ist:
auf der Grundlage eines Betriebszustands des Brennstoffzellenstapels (1) zu bestimmen, ob ein Aufwärmen des Brennstoffzellenstapels (1) vollendet ist, und
bevor das Aufwärmen des Brennstoffzellenstapels (1) vollendet ist, die Druckeinstellvorrichtung (11, 12) zu steuern, um den Kühlwasserdruck unter den Kühlwasserdruck nach Beenden des Aufwärmens zu verringern.

2. Brennstoffzellensystem nach Anspruch 1, wobei die Steuerung (16) ferner ausgelegt ist, die Druckeinstellvorrichtung (11, 12), bevor das Aufwärmen des Brennstoffzellenstapels (1) vollendet ist, zu steuern, um den Kühlwasserdruck auf einen Druck einzustellen, bei dem Gas an der Elektrode (2, 3) den Kühlwasserdurchgang (9) nicht durchdringt.

3. Brennstoffzellensystem nach Anspruch 1, wobei die Steuerung (16) ferner ausgelegt ist, die Druckeinstellvorrichtung (11, 12), bevor das Aufwärmen des Brennstoffzellenstapels (1) vollendet ist, zu steuern, um den Kühlwasserdruck auf einen höheren als einen minimalen Wert festzulegen, bei dem Gas an der Elektrode (2, 3) den Kühlwasserdurchgang (9) nicht durchdringt.

4. Brennstoffzellensystem nach Anspruch 3, ferner umfassend einen Sensor (5, 6, 7), der eine Druckdifferenz zwischen dem Kühlwasserdurchgang (9) und der Elektrode (2, 3) am Einlass des Brennstoffzellenstapels (1) erfasst, und
wobei die Steuerung (16) ferner ausgelegt ist, den minimalen Wert des Drucks, bei dem Gas an der Elektrode (2, 3) den Kühlwasserdurchgang (9) nicht durchdringt, gemäß der gemessenen Druckdifferenz zu bestimmen.

5. Brennstoffzellensystem nach Anspruch 1, ferner umfassend einen Sensor (15), der die Temperatur des Brennstoffzellenstapels (1) erfasst, und
wobei die Steuerung (16) ferner ausgelegt ist, zu bestimmen, dass das Aufwärmen des Brennstoffzellenstapels (1) vollendet ist, wenn die Temperatur des Brennstoffzellenstapels (1) auf eine vorbestimmte Temperatur angestiegen ist.

6. Brennstoffzellensystem nach Anspruch 5, wobei
der Sensor (15), der die Temperatur des Brennstoffzellenstapels (1) erfasst, die Innentemperatur des Brennstoffzellenstapels (1) erfasst, und
die Steuerung (16) ferner ausgelegt ist, zu bestimmen, dass das Aufwärmen des Brennstoffzellenstapels (1) vollendet ist, wenn die Innentemperatur des Brennstoffzellenstapels (1) auf eine vorbestimmte Temperatur angestiegen ist, bei der eine Wasserfestsetzung in dem Brennstoffzellenstapel (1) nicht auftritt.

7. Brennstoffzellensystem nach Anspruch 1, wobei
der Brennstoffzellenstapel (1) viele Zellen (c1, c2, ..., cn) umfasst,
das System ferner Sensoren (21) umfasst, die die Temperaturen der Zellen (c1, c2, ..., cn) erfassen, und
die Steuerung (16) ferner ausgelegt ist, zu bestimmen, dass das Aufwärmen des Brennstoffzellenstapels (1) vollendet ist, wenn die Durchschnittstemperatur der Zellen (c1, c2, ..., cn) auf eine vorbestimmte Temperatur angestiegen ist, bei der eine Wasserfestsetzung in dem Brennstoffzellenstapel (1) nicht auftritt.

8. Brennstoffzellensystem nach Anspruch 7, wobei die Steuerung (16) ferner ausgelegt ist, eine Wasserfestsetzung in dem Brennstoffzellenstapel (1) aufgrund der Verteilung der Zellentemperatur vorherzusagen und den Druck des Kühlwassers steuert, damit dieser höher als ein minimaler Wert ist, bei dem Gas an der Elektrode (2, 3) den Kühlwasserdurchgang (9) nicht durchdringt.

9. Brennstoffzellensystem nach Anspruch 1, ferner umfassend einen Sensor (32), der die Temperatur des Fluids, das dem Brennstoffzellenstapel (1) zugeführt wird, am Auslass des Brennstoffzellenstapel (1) erfasst, und
die Steuerung (16) ferner ausgelegt ist, zu bestimmen, dass das Aufwärmen des Brennstoffzellenstapels (1) vollendet ist, wenn die Temperatur des Fluids am Auslass des Brennstoffzellenstapels (1) auf eine vorbestimmte Temperatur angestiegen ist.

10. Brennstoffzellensystem nach Anspruch 1, ferner umfassend einen Sensor (31, 32), der eine Temperaturdifferenz des zum Brennstoffzellenstapel (1) zugeführten Fluids am Einlass und Auslass des Brennstoffzellenstapels (1) erfasst, wobei die Steuerung (16) ferner ausgelegt ist, zu bestimmen, dass das Aufwärmen des Brennstoffzellenstapels (1) vollendet ist, wenn die Temperaturdifferenz des Fluids am Einlass und Auslass des Brennstoffzellenstapels (1) auf eine vorbestimmte Temperatur angestiegen ist.

11. Brennstoffzellensystem nach Anspruch 9 oder 10, wobei das Fluid ein Kühlwasser, ein Brennstoffgas oder dem Brennstoffzellenstapel (1) zugeführte Luft ist.

12. Brennstoffzellensystem nach einem der Ansprüche 1 bis 11, wobei die Steuerung (16) ferner ausgelegt ist, den Feuchtigkeitszustand der Membranelektrode des Brennstoffzellenstapels (1) aufgrund des Betriebszustands des Brennstoffzellenstapels (1) zu bestimmen, und
wenn die Membranelektrode nicht ausreichend befeuchtet ist, der Druck des Kühlwassers erhöht wird, um ein Herausfließen von Wasser aus der Elektrode (2, 3) zum Kühlwasserdurchgang (9) zu unterdrücken.

13. Anlaufverfahren für ein Brennstoffzellensystem mit einem Brennstoffzellenstapel (1), bei dem ein Kühlwasserdurchgang (9) und eine Elektrode (2, 3) über eine poröse Platte (4), durch die Wasser hindurchtreten kann, verbunden sind, und einer Druckeinstellvorrichtung (11, 12), welche den Druck des Kühlwassers in dem Kühlwasserdurchgang (9) einstellt, wobei das Verfahren umfasst:
Bestimmen, auf der Grundlage des Betriebszustands des Brennstoffzellenstapels (1), ob ein Aufwärmen des Brennstoffzellenstapels (1) vollendet ist, und
bevor das Aufwärmen des Brennstoffzellenstapels (1) vollendet ist, Steuern der Druckeinstellvorrichtung (11, 12), um den Kühlwasserdruck unter den Kühlwasserdruck nach Beenden des Aufwärmens zu verringern.

## Revendications

1. Système de pile à combustible, comprenant :
un empilage de piles à combustible (1) dans lequel un passage d'eau de refroidissement (9) et une électrode (2, 3) sont reliés par l'intermédiaire d'une plaque poreuse (4) à travers laquelle de l'eau peut passer,
un dispositif de réglage de pression (11, 12) qui règle la pression d'eau de refroidissement dans le passage d'eau de refroidissement (9), **caractérisé par**:
un dispositif de commande (16) configuré pour :
déterminer si le réchauffage de l'empilage de piles à combustible (1) est complet sur la base de l'état de fonctionnement de l'empilage de piles à combustible (1), et
avant que réchauffage de l'empilage de piles à combustible (1) ne soit complet, commander le dispositif de réglage de pression (11, 12) pour réduire la pression d'eau de refroidissement pour qu'elle soit inférieure à la pression d'eau de refroidissement après que le réchauffage est complet.

2. Système de pile à combustible selon la revendication 1, dans lequel :
le dispositif de commande (16) est en outre configuré, avant que réchauffage de l'empilage de piles à combustible (1) ne soit complet, pour commander le dispositif de réglage de pression (11, 12) pour régler la pression d'eau de refroidissement à une pression à laquelle un gaz à l'électrode (2, 3) ne pénètre pas dans le passage d'eau de refroidissement (9).

3. Système de pile à combustible selon la revendication 1, dans lequel :
le dispositif de commande (16) est en outre configuré, avant que le réchauffage de l'empilage de piles à combustible (1) ne soit complet, pour commander le dispositif de réglage de pression (11, 12) pour régler la pression d'eau de refroidissement pour qu'elle soit supérieure à une valeur minimum à laquelle un gaz à l'électrode (2, 3) ne pénètre pas dans le passage d'eau de refroidissement (9).

4. Système de pile à combustible selon la revendication 3, comprenant en outre un capteur (5, 6, 7) qui détecte une pression différentielle entre le passage d'eau de refroidissement (9) et l'électrode (2,3) à l'entrée de l'empilage de piles à combustible (1), et
le dispositif de commande (16) est en outre configuré pour déterminer la valeur minimum de la pression à laquelle un gaz à l'électrode (2, 3) ne pénètre pas dans le passage d'eau de refroidissement (9) selon la pression différentielle mesurée.

5. Système de pile à combustible selon la revendication 1, comprenant en outre un capteur (15) qui détecte la température de l'empilage de piles à combustible (1), et
le dispositif de commande (16) est en outre configuré pour déterminer que le réchauffage de l'empilage de piles à combustible (1) est complet lorsque la température de l'empilage de piles à combustible (1) est montée jusqu'à une température prédéterminée.

6. Système de pile à combustible selon la revendication 5, dans lequel :
le capteur (15) qui détecte la température de l'empilage de piles à combustible (1) détecte la température interne de l'empilage de piles à combustible (1), et
le dispositif de commande (16) est en outre configuré pour déterminer que le réchauffage de l'empilage de piles à combustible (1) est complet lorsque la température interne de l'empilage de piles à combustible (1) est montée jusqu'à une température prédéterminée à laquelle le colmatage d'eau dans l'empilage de piles à combustible (1) ne se produit pas.

7. Système de pile à combustible selon la revendication 1, dans lequel :
l'empilage de piles à combustible (1) comprend plusieurs cellules (c1, c2,..., cn),
le système comprend en outre des capteurs (21) qui détectent les températures des cellules (c1, c2,..., cn), et
le dispositif de commande (16) est en outre configuré pour déterminer que le réchauffage de l'empilage de piles à combustible (1) est complet lorsque la température moyenne des cellules (c1, c2,..., cn) est montée jusqu'à une température prédéterminée à laquelle un colmatage d'eau dans l'empilage de piles à combustible (1) ne se produit pas.

8. Système de pile à combustible selon la revendication 7, dans lequel :
le dispositif de commande (16) est en outre configuré pour prédire un colmatage d'eau dans l'empilage de piles à combustible (1) à partir de la distribution de température de cellule, et commande la pression de l'eau de refroidissement pour qu'elle soit supérieure à une valeur minimum à laquelle un gaz à l'électrode (2, 3) ne pénètre pas dans le passage d'eau de refroidissement (9).

9. Système de pile à combustible selon la revendication 1, comprenant en outre un capteur (32) qui détecte la température du fluide fourni à l'empilage de piles à combustible (1) à la sortie de l'empilage de piles à combustible (1), et
le dispositif de commande (16) est en outre configuré pour déterminer que le réchauffage de l'empilage de piles à combustible (1) est complet lorsque la température du fluide à la sortie de l'empilage de piles à combustible (1) est montée jusqu'à une température prédéterminée.

10. Système de pile à combustible selon la revendication 1, comprenant en outre un capteur (31, 32) qui détecte une différence de température du fluide fourni à l'empilage de piles à combustible (1) à l'entrée et à la sortie de l'empilage de piles à combustible (1), dans lequel :
le dispositif de commande (16) est en outre configuré pour déterminer qu'un réchauffage de l'empilage de piles à combustible (1) est complet lorsque la différence de température du fluide à l'entrée et à la sortie de l'empilage de piles à combustible (1) a augmenté jusqu'à une température prédéterminée.

11. Système de pile à combustible selon la revendication 9 ou 10, dans lequel le fluide est un élément parmi de l'eau de refroidissement, un gaz combustible et de l'air fourni à l'empilage de piles à combustible (1).

12. Système de pile à combustible selon une quelconque des revendications 1 à 11, dans lequel le dispositif de commande (16) est en outre configuré pour :
déterminer l'état d'humidification de l'électrode à membrane de l'empilage de piles à combustible (1) à partir de l'état de fonctionnement de l'empilage de piles à combustible (1), et
lorsque l'électrode à membrane n'est pas suffisamment humidifié, la pression de l'eau de refroidissement est augmentée pour supprimer la sortie de l'eau de l'électrode (2, 3) vers le passage d'eau de refroidissement (9).

13. Procédé de démarrage pour un système de pile à combustible comprenant un empilage de piles à combustible (1) dans lequel un passage d'eau de refroidissement (9) et une électrode (2, 3) sont reliés par l'intermédiaire d'une plaque poreuse (4) à travers laquelle de l'eau peut passer et un dispositif de réglage de pression (11, 12) qui règle la pression d'eau de refroidissement dans le passage d'eau de refroidissement (9), le procédé comprenant les étapes consistant à :
déterminer si réchauffage de l'empilage de piles à combustible (1) est complet sur la base de l'état de fonctionnement de l'empilage de piles à combustible (1), et
avant que réchauffage de l'empilage de piles à combustible (1) ne soit complet, commander le dispositif de réglage de pression (11, 12) pour réduire la pression d'eau de refroidissement pour qu'elle soit inférieure à la pression d'eau de refroidissement après que réchauffage est complet.
